# EUROPEAN PATENT APPLICATION

(11) **EP 2 922 257 A1**
(43) Date of publication of application: **23.09.2015**
(21) Application number: 13855256.7
(22) Date of filing: 28.08.2013
(51) Int. Cl.: H04L 12/863

(54) **TRAFFIC MANAGEMENT SCHEDULING METHOD AND APPARATUS**

(30) Priority: 19.11.2012 CN 201210470661
(71) Applicant: ZTE Corporation, Shenzhen, Guangdong 518057 (CN)
(72) Inventor: YANG, Minhua, Shenzhen Guangdong 518057 (CN); XIE, Xiaolong, Shenzhen Guangdong 518057 (CN); SONG, Junhui, Shenzhen Guangdong 518057 (CN)
(74) Representative: Mozzi, Matteo
(86) International application number: PCT/CN2013/082485
(87) International publication number: WO 2014/075489

(57) **Abstract**

Provided are a traffic management scheduling method and apparatus. The method includes: receiving an operation request, where the operation request comprises: a dequeue request or an enqueue request (S102); and performing a scheduling operation on a queue linked list according to the operation request, where the queue linked list comprises one or more active queues and one or more inactive queues (S104). The technical solution solves a technical problem in the related art that the increasing number of queues has an excessively high demand for buffer resources, resulting in traffic management difficulties, thereby saving storage resources required for buffering linked list information, and enhancing the performance of a traffic management system.

## Description

### Technical Field

The present invention relates to the field of communications, including, e.g., a method and apparatus for traffic management scheduling.

### Background

In the field of data communications, as requirements of service quality for data products are increasing, the requirements of the technical indexes for traffic management, such as rate of packet processing, number of queues supported, bandwidth and stepping size are also increasing.

Currently, the most important component in a traffic management system is a congestion management component. The congestion management component is mainly configured to perform dequeue scheduling by a queue scheduling algorithm and in coordination with other components, so that traffic management functions can be completed by these components together.

The traffic management system controls the dequeue of a queue by a grant, and the queue cannot be dequeued until the grant is obtained. The distribution of the grant is controlled by the queue scheduling algorithm. Various queues compose a linked list under the control of the queue scheduling algorithm. In related art, the linked list may be divided into active queue linked list and inactive queue linked list according to whether the queue is active currently.

Since the technical indexes for traffic management are increasing, particularly the buffer resources used in implementing traffic management are increasing with the increasing in the number of queues. However, excessively high demand for buffer resources may cause the traffic management system difficult to be implemented. In the specific implementation of a design, whether traffic management functions are implemented in a Field Programmable Gate Array (FPGA for short) or the traffic management functions are implemented in an Application Specific Integrated Circuit (ASIC for short), use of buffer resources is an important criterion for evaluating implementability. Excessively high demand for buffer resources will cause the traffic management system difficult to be implemented.

Aiming at the above problem, no effective solution has been presented.

### Summary

Embodiments of the present invention provide a traffic management scheduling method and apparatus to at least solve a technical problem in the related art that the increasing number of queues has an excessively high demand for buffer resources, resulting in traffic management difficulties.

According to one aspect of the embodiments of the present invention, a traffic management scheduling method and apparatus is provided. The traffic management scheduling method includes: receiving an operation request, wherein the above operation request includes: a dequeue request or an enqueue request; and performing a scheduling operation on a queue linked list according to the above operation request, wherein the queue linked list includes one or more active queues and one or more inactive queues.

In an example embodiment, the above queue linked list includes following linked list information: a head pointer of the queue linked list, a tail pointer of the queue linked list, and a tail pointer of the one or more active queues, wherein the head pointer of the above queue linked list points to the first queue of the queue linked list, the tail pointer of the queue linked list points to the last queue of the above queue linked list, and the tail pointer of the one or more active queues points to the last active queue in the one or more active queues in the above queue linked list.

In an example embodiment, the above queue linked list includes a first queue area and a second queue area, the above second queue area being connected to tail of the above first queue area, wherein the above first queue area is used for storing the above one or more active queues, and the above second queue area is used for storing the above one or more inactive queues.

In an example embodiment, performing the operation on the queue linked list according to the above operation request includes: when the above operation request is the enqueue request, setting a queue to be enqueued to be the last queue of the above queue linked list.

In an example embodiment, performing the operation on the queue linked list according to the above operation request includes: when the above operation request is the dequeue request and a queue to be dequeued is to be dequeued for the first time, labelling the tail of the above queue to be dequeued as the tail pointer of the one or more active queues and performing a dequeue operation; and after finishing the dequeue operation, performing a delete or queue transfer operation on the above queue to be dequeued.

In an example embodiment, performing the queue transfer operation on the queue to be dequeued includes: judging, according to a scheduling algorithm used in scheduling the above queue to be dequeued, whether to set the above queue to be dequeued to be the last queue of the above first queue area; and when it is judged not to set the queue to be dequeued to be the last queue of the first queue area, setting the above queue to be dequeued to be the last queue of the above queue linked list.

In an example embodiment, after judging, according to the scheduling algorithm used in scheduling the above queue to be dequeued, whether to set the above queue to be dequeued to be the last queue of the above first queue area, the above method further includes: rewriting the tail pointer of the above one or more active queues to be the above queue to be dequeued when it is judged to set the above queue to be dequeued to be the last queue of the above first queue area.

According to another aspect of the embodiments of the present invention, a traffic management scheduling apparatus is provided. The apparatus includes: a receiving module configured to receive an operation request, wherein the above operation request includes: a dequeue request or an enqueue request; and a processing module configured to perform an operation on a queue linked list according to the above operation request, wherein the above queue linked list includes one or more active queues and one or more inactive queues.

In an example embodiment, the above queue linked list includes following linked list information: a head pointer of the above queue linked list, a tail pointer of the above queue linked list, and a tail pointer of the one or more active queues; the above queue linked list includes a first queue area and a second queue area, the above second queue area being connected to tail of the above first queue area, wherein the above first queue area is used for storing the above one or more active queues, and the above second queue area is used for storing the above one or more inactive queues.

In an example embodiment, the above processing module includes: an enqueue unit configured to set a queue to be enqueued to be the last queue of the above queue linked list when the above operation request is the enqueue request.

In an example embodiment, the above processing module includes: a dequeue unit configured to label the tail of a queue to be dequeued as the tail pointer of the one or more active queues and perform a dequeue operation when the above operation request is the dequeue request and the above queue to be dequeued is to be dequeued for the first time; and a transfer unit configured to perform a delete or queue transfer operation on the queue to be dequeued after the dequeue operation is finished.

In an example embodiment, the above transfer unit includes: a judging subunit configured to judge, according to a scheduling algorithm used in scheduling the above queue to be dequeued, whether to set the above queue to be dequeued to be the last queue of the above first queue area; an setting subunit configured to set the queue to be dequeued to be the last queue of the above queue linked list when it is judged not to set the queue to be dequeued to be the last queue of the first queue area; and a rewriting subunit configured to rewrite the tail pointer of the above one or more active queues to be the queue to be dequeued when it is judged to set the above queue to be dequeued to be the last queue of the above first queue area.

In the embodiments of the present invention, an operation request which may include a dequeue request or an enqueue request is received, and a scheduling operation is performed on a queue linked list according to the above operation request, wherein the queue linked list includes one or more active queues and one or more inactive queues. By virtue of the technical solution, one or more active queues and one or more inactive queues are stored in the same linked list, avoiding that active queues are stored in one linked list and inactive queues are stored in another linked list. In this way, the problem of excessively high demand for buffer resources due to increasing number of queues requiring a large amount of linked list information to be buffered, resulting in traffic management difficulties, can be solved, thereby in turn avoiding storing a large amount of linked list information to save storage resources required for buffering linked list information, and improving the performance of a traffic management system.

### Brief Description of the Drawings

The drawings, provided for further understanding of the present invention and forming a part of the application, are used to explain the present invention together with embodiments of the present invention rather than to limit the present invention. In the accompanying drawings:
Fig. 1 is a flowchart of a traffic management scheduling method according to an embodiment of the present invention;
Fig. 2 is a structural block diagram of a traffic management scheduling apparatus according to an embodiment of the present invention;
Fig. 3 is schematic diagram showing the comparison between a traditional linked list structure and the linked list structure in the above traffic management scheduling method according to an embodiment of the present invention;
Fig. 4 is a flowchart of the enqueue operations on the linked list according to the above traffic management scheduling method according to an embodiment of the present invention;
Fig. 5 is a flowchart of the dequeue operations on the linked list according to the above traffic management scheduling method according to an embodiment of the present invention.

### Detailed Description of Embodiments

The example embodiments are described in conjunction with the drawings as follows. It should be noted that the embodiments and the features of the embodiments of the application can be combined with each other if no conflict is caused.

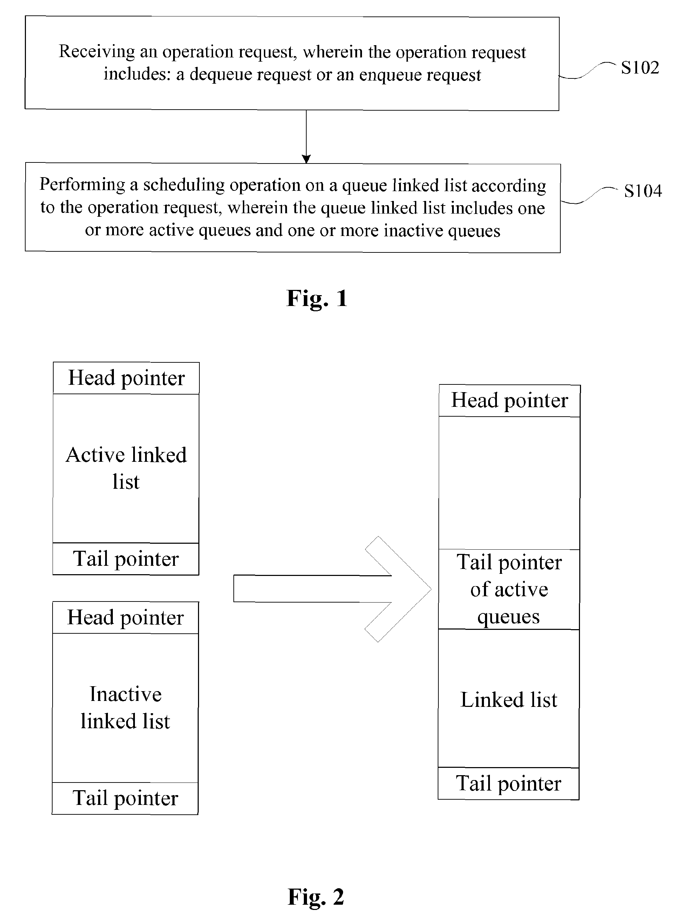

An embodiment of the present invention provides a traffic management scheduling method. As shown in Fig. 1, the traffic management scheduling method includes the following steps S 102 to S104.

In step S102: an operation request is received, wherein the operation request includes: a dequeue request or an enqueue request.

In step S104: a scheduling operation is performed on a queue linked list according to the operation request, wherein the queue linked list includes one or more active queues and one or more inactive queues.

In the embodiment of the present invention, an operation request which may include a dequeue request or an enqueue request is received, and a scheduling operation is performed on a queue linked list according to the above operation request, wherein the queue linked list includes one or more active queues and one or more inactive queues. By virtue of the technical solution, one or more active queues and one or more inactive queues are stored in the same linked list, avoiding that active queues are stored in one linked list and inactive queues are stored in another linked list. In this way, the problem of excessively high demand for buffer resources due to increasing number of queues requiring a large amount of linked list information to be buffered, resulting in traffic management difficulties, can be solved, thereby in turn avoiding storing a large amount of linked list information to save storage resources required for buffering linked list information, and improving the performance of a traffic management system.

In order to save the storage resources required for storing linked list information, in an example embodiment of the present invention, the above queue linked list includes the following linked list information: a head pointer of the queue linked list, a tail pointer of the queue linked list, and a tail pointer of the one or more active queues, wherein the head pointer of the above queue linked list points to the first queue of the queue linked list, the tail pointer of the queue linked list points to the last queue of the above queue linked list, and the tail pointer of the above one or more active queues points to the last active queue in the one or more active queues of the above queue linked list.

In an example embodiment, storing the one or more active queues and the one or more inactive queues in the same linked list, i.e., the above queue linked list, substantially reduces the storage volume for linked list information. As shown in Fig. 2, in the traditional method, the head and tail pointers of the active queues and the head and tail pointers of the inactive queues need to be stored. If the above queue linked list is adopted, only the head and tail pointers of the linked list and the tail pointer of the active queues need to be stored. In the case where the number of queues of the current traffic management system is greatly increasing, a large amount of buffer resources is saved, thus enhancing the implementability of the system.

In order to facilitate the scheduling of the queues in the linked list, in an example embodiment of the present invention, the above queue linked list includes a first queue area and a second queue area, the above second queue area being connected to the tail of the above first queue area, wherein the above first queue area is used for storing the above one or more active queues, and the above second queue area is used for storing the above one or more inactive queues.

In an example embodiment, performing the operation on the queue linked list according to the above operation request includes: when the above operation request is the enqueue request, a queue to be enqueued is set to be the last queue of the above queue linked list.

In order to meet the demands of different application scenarios, in an example embodiment of the present invention, performing the operation on the queue linked list according to the above operation request includes: when the above operation request is the dequeue request and a queue to be dequeued is to be dequeued for the first time, the tail of the above queue to be dequeued is labelled as the tail pointer of the one or more active queues and a dequeue operation is performed; and after the dequeue operation is finished, a delete or queue transfer operation may be performed on the above queue to be dequeued.

In an example embodiment, performing the queue transfer operation on the queue to be dequeued includes: it is judged, according to a scheduling algorithm used in scheduling the above queue to be dequeued, whether to set the above queue to be dequeued to be the last queue of the above first queue area; and when it is judged not to set the queue to be dequeued to be the last queue of the first queue area, the above queue to be dequeued is set to be the last queue of the above queue linked list.

In an example embodiment, after judging, according to the scheduling algorithm used in scheduling the above queue to be dequeued, whether to set the above queue to be dequeued to be the last queue of the above first queue area, the above method further includes: the tail pointer of the above one or more active queues is rewritten to be the above queue to be dequeued when it is judged to set the above queue to be dequeued to be the last queue of the above first queue area.

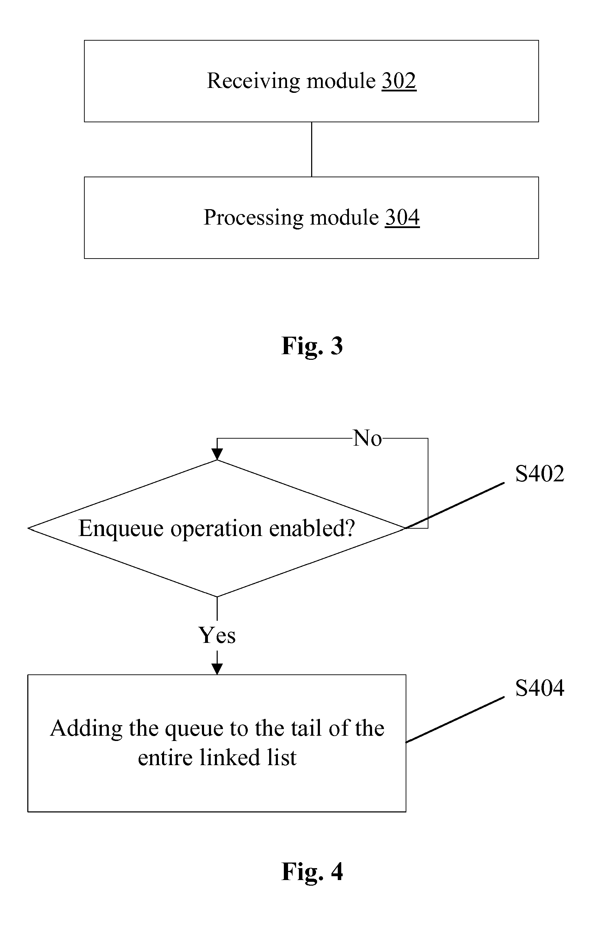

An example embodiment of the present invention provides an example traffic management scheduling apparatus. As shown in Fig. 3, the traffic management scheduling apparatus includes: a receiving module **302** configured to receive an operation request, wherein the above operation request includes: a dequeue request or an enqueue request; and a processing module **304** coupled with the receiving module **302** and configured to perform an operation on a queue linked list according to the above operation request, wherein the above queue linked list includes one or more active queues and one or more inactive queues.

In the above example embodiment, the receiving module **302** receives an operation request, wherein the operation request includes: a dequeue request or an enqueue request. The processing module **304** performs a scheduling operation on a queue linked list according to the above operation request, wherein the queue linked list includes one or more active queues and one or more inactive queues. By virtue of the technical solution, one or more active queues and one or more inactive queues are stored in the same linked list, avoiding that active queues are stored in one linked list and inactive queues are stored in another linked list. In this way, the problem of excessively high demand for buffer resources due to increasing number of queues requiring a large amount of linked list information to be buffered, resulting in traffic management difficulties, can be solved, thereby in turn avoiding storing a large amount of linked list information to save storage resources required for buffering linked list information, and improving the performance of a traffic management system.

In order to meet the demands of different application scenarios, in this example embodiment, the above processing module **304** includes: an enqueue unit configured to set a queue to be enqueued to be the last queue of the above queue linked list when the above operation request is the enqueue request.

In an example embodiment, the above processing module **304** may further includes: a dequeue unit configured to label the tail of a queue to be dequeued as the tail pointer of the one or more active queues and perform a dequeue operation when the above operation request is the dequeue request and the above queue to be dequeued is to be dequeued for the first time; and a transfer unit configured to perform a delete or queue transfer operation on the queue to be dequeued after the dequeue operation is finished.

In an example embodiment, the above transfer unit includes: a judging subunit configured to judge, according to a scheduling algorithm used in scheduling the above queue to be dequeued, whether to set the above queue to be dequeued to be the last queue of the above first queue area; an setting subunit configured to set the queue to be dequeued to be the last queue of the above queue linked list when it is judged not to set the queue to be dequeued to be the last queue of the first queue area; and a rewriting subunit configured to rewrite the tail pointer of the above one or more active queues to be the queue to be dequeued when it is judged to set the above queue to be dequeued to be the last queue of the above first queue area.

The various example embodiments of the present invention are described in detail hereinafter in conjunction with the drawings.

In this example embodiment, in order to solve the problem in the related art that a large amount of queue linked list information need to be buffered due to the increasing number of queues in the traffic management system and excessively high demand for buffer resources results in difficulties in implementing the traffic management system, this example embodiment provide a technical solution that combines the active queue linked list and inactive queue linked list of traditional design into a single linked list. Adopting this example technical solution may greatly reduce the buffer resources for the queue linked list information. Taking the enqueue operation of the queue linked list for example, as shown in Fig. 4, the linked list enqueue operation mainly includes the following steps S402 to S404.

In step S402: it is judged whether an enqueue operation enabling instruction is received, wherein if is the enqueue operation enabling instruction is received, step S404 is carried out; otherwise, continue waiting.

In step S404: the queue (the queue to be enqueued) is added to the tail of the entire linked list (i.e., set to be the last queue of the queue linked list).

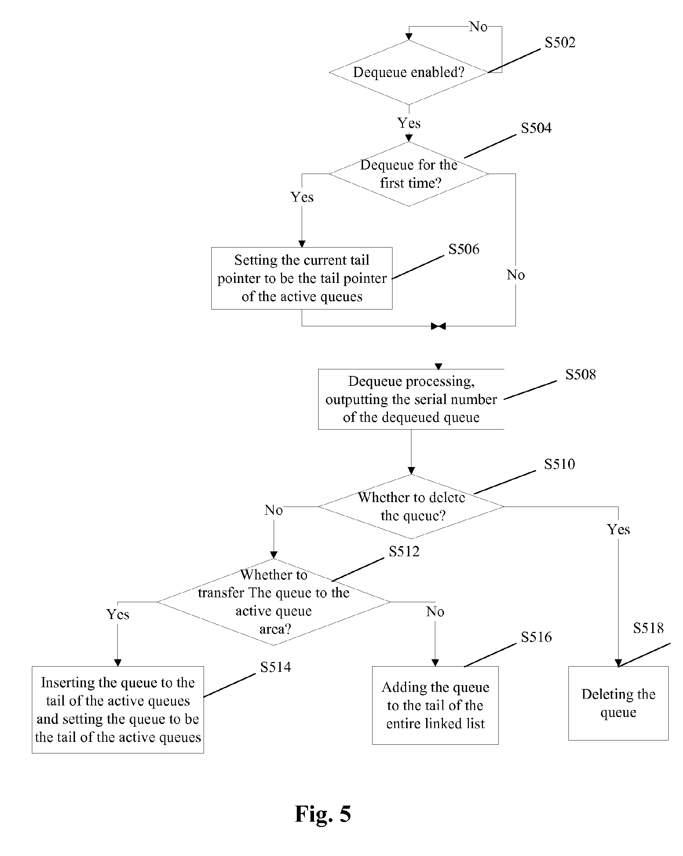

In this example embodiment, in order to solve the problem in the related art that a large amount of queue linked list information need to be buffered due to the increasing number of queues in the traffic management system and excessively high demand for buffer resources results in difficulties in implementing the traffic management system, this example embodiment provide a technical solution that combines the active queue linked list and inactive queue linked list of traditional design into a single linked list. Adopting this example technical solution may greatly reduce the buffer resources for the queue linked list information. Taking the dequeue operation of the queue linked list for example, as shown in Fig. 5, the linked list dequeue operation mainly includes the following steps S502 to S518.

In step S502: it is judged whether a dequeue operation enabling instruction is received, wherein if the dequeue operation enabling instruction is received, step S504 is carried out; otherwise, continue waiting.

In step S504: it is judged whether it is the first time to dequeue, wherein if it is the first time to dequeue, step S506 is carried out; otherwise, step S508 is carried out.

In step S506: the tail pointer of the current queue (the queue to be dequeued) is set to be the tail pointer of active queues.

In step S508: a dequeue operation is performed, and the serial number of the dequeued queue is output.

In step S510: it is judged whether to delete the dequeued queue from the linked list, wherein if it is judged to delete the dequeued queue from the linked list, step S518 is carried out; otherwise, step S512 is carried out.

In step S512: it is judged whether to transfer the queue to the active queue area (the first queue area), wherein if it is judged to transfer the queue to the active queue area, step S514 is carried out; otherwise, step S516 is carried out.

In step S514: the queue is inserted to the tail of the active queues (set to be the last queue in the first queue area), and the queue is set to be the tail of the active queues.

In step S516: the queue is added to the tail of the entire linked list.

In step S518: the queue is deleted.

Traffic management by the method of this embodiment can store the head and tail pointers for a linked list and the tail of the inactive queues only, rather than store the head and tail pointers for the active queues and the head and tail pointers for the inactive queues as defined in the related art. In the case where the number of queues in the current traffic management system is greatly increasing, a large amount of buffer resources can be saved. The traffic management system is made to be easier to implement on the premise of the assurance of high performance of traffic management, thus reaching the goal of enhancing the implementability of the traffic management system.

It can be seen from the above description that the example above embodiment achieves the following effects: an operation request which may include a dequeue request or an enqueue request is received, and a scheduling operation is performed on a queue linked list according to the above operation request, wherein the queue linked list includes one or more active queues and one or more inactive queues. By virtue of the technical solution, one or more active queues and one or more inactive queues are stored in the same linked list, avoiding that active queues are stored in one linked list and inactive queues are stored in another linked list. In this way, the problem of excessively high demand for buffer resources due to increasing number of queues requiring a large amount of linked list information to be buffered, resulting in traffic management difficulties, can be solved, thereby in turn avoiding storing a large amount of linked list information to save storage resources required for buffering linked list information, and improving the performance of a traffic management system.

Apparently, those skilled in the art shall understand that the above modules and steps of the present invention can be realized by using general purpose calculating device, can be integrated in one calculating device or distributed on a network which consists of a plurality of calculating devices, and alternatively they can be realized by using the executable program code of the calculating device, so that consequently they can be stored in the storing device and executed by the calculating device, in some cases, can perform the shown or described step in sequence other than herein, or they are made into integrated circuit module respectively, or a plurality of modules or steps thereof are made into one integrated circuit module. In this way, the present invention is not restricted to any particular hardware and software combination.

The above description is only example embodiments of the present invention and is not intended to limit the present invention, and the present invention can have a variety of changes and modifications for ordinary person skilled in the art. Any modification, equivalent replacement, or improvement made within the principle of the present invention shall all fall within the protection scope defined by the claims of the present invention.

## Claims

1. A traffic management scheduling method, **characterized by** comprising:
receiving an operation request, wherein the operation request comprises: a dequeue request or an enqueue request; and
performing an operation on a queue linked list according to the operation request, wherein the queue linked list comprises one or more active queues and one or more inactive queues.

2. The method according to claim 1, **characterized in that** the queue linked list comprises following linked list information:
a head pointer of the queue linked list, a tail pointer of the queue linked list, and a tail pointer of the one or more active queues, wherein the head pointer of the queue linked list points to the first queue of the queue linked list, the tail pointer of the queue linked list points to the last queue of the queue linked list, and the tail pointer of the one or more active queues points to the last active queue in the one or more active queues of the queue linked list.

3. The method according to claim 2, **characterized in that** the queue linked list comprises a first queue area and a second queue area, the second queue area being connected to tail of the first queue area, wherein the first queue area is used for storing the one or more active queues, and the second queue area is used for storing the one or more inactive queues.

4. The method according to claim 2 or 3, **characterized in that** performing the operation on the queue linked list according to the operation request comprises:
when the operation request is the enqueue request, setting a queue to be enqueued to be the last queue of the queue linked list.

5. The method according to claim 3, **characterized in that** performing the operation on the queue linked list according to the operation request comprises:
when the operation request is the dequeue request and a queue to be dequeued is to be dequeued for the first time, labelling the tail of the queue to be dequeued as the tail pointer of the one or more active queues and performing a dequeue operation; and
after finishing the dequeue operation, performing a delete or queue transfer operation on the queue to be dequeued.

6. The method according to claim 5, **characterized in that** performing the queue transfer operation on the queue to be dequeued comprises:
judging, according to a scheduling algorithm used in scheduling the queue to be dequeued, whether to set the queue to be dequeued to be the last queue of the first queue area; and
when it is judged not to set the queue to be dequeued to be the last queue of the first queue area, setting the queue to be dequeued to be the last queue of the queue linked list.

7. The method according to claim 6, **characterized in that** after judging, according to the scheduling algorithm used in scheduling the queue to be dequeued, whether to set the queue to be dequeued to be the last queue of the first queue area, the method further comprises:
rewriting the tail pointer of the one or more active queues to be the queue to be dequeued when it is judged to set the queue to be dequeued to be the last queue of the first queue area.

8. A traffic management scheduling apparatus, **characterized by** comprising:
a receiving module configured to receive an operation request, wherein the operation request comprises: a dequeue request or an enqueue request; and
a processing module configured to perform an operation on a queue linked list according to the operation request, wherein the queue linked list comprises one or more active queues and one or more inactive queues.

9. The apparatus according to claim 8, **characterized in that** the queue linked list comprises following linked list information: a head pointer of the queue linked list, a tail pointer of the queue linked list, and a tail pointer of the one or more active queues; the queue linked list comprises a first queue area and a second queue area, the second queue area being connected to tail of the first queue area, wherein the first queue area is used for storing the one or more active queues, and the second queue area is used for storing the one or more inactive queues.

10. The apparatus according to claim 8 or 9, **characterized in that** the processing module comprises:
an enqueue unit configured to set a queue to be enqueued to be the last queue of the queue linked list when the operation request is the enqueue request.

11. The apparatus according to claim 9, **characterized in that** the processing module comprises:
a dequeue unit configured to label the tail of a queue to be dequeued as the tail pointer of the one or more active queues and perform a dequeue operation when the operation request is the dequeue request and the queue to be dequeued is to be dequeued for the first time; and
a transfer unit configured to perform a delete or queue transfer operation on the queue to be dequeued after the dequeue operation is finished.

12. The apparatus according to claim 11, **characterized in that** the transfer unit comprises:
a judging subunit configured to judge, according to a scheduling algorithm used in scheduling the queue to be dequeued, whether to set the queue to be dequeued to be the last queue of the first queue area;
an setting subunit configured to set the queue to be dequeued to be the last queue of the queue linked list when it is judged not to set the queue to be dequeued to be the last queue of the first queue area; and
a rewriting subunit configured to rewrite the tail pointer of the one or more active queues to be the queue to be dequeued when it is judged to set the queue to be dequeued to be the last queue of the first queue area.
